# EUROPEAN PATENT APPLICATION

(11) **EP 1 932 432 A1**
(43) Date of publication of application: **18.06.2008**
(21) Application number: 06076932.0
(22) Date of filing: 25.10.2006
(51) Int. Cl.: A23D 7/00, A21D 8/04, A23C 15/12, A23L 1/30

(54) **Improved storage stability of micro-organisms**

(71) Applicant: Friesland Brands B.V., 7943 PE Meppel (NL)
(72) Inventor: The designation of the inventor has not yet been filed
(74) Representative: van Loon, C.J.J.

(57) **Abstract**

The invention relates to methods for improving the storage stability of viable micro-organisms and to compositions comprising viable micro-organisms having improved stability. In particular, it concerns compositions with food grade micro-organisms, such as baker's yeast or probiotic bacteria, having an improved long-term storage stability. Provided is a micro-organism preparation comprising viable micro-organisms in a water-in-oil emulsion, wherein said micro-organism is localized primarily at the water/oil interphase and /or in the water phase of said W/O emulsion and/or wherein said micro-organism is essentially absent from the oil phase. Also provided is a method for increasing the storage stability of a (food grade) micro-organism.

## Description

The invention relates to methods for improving the storage stability of viable micro-organisms and to compositions comprising viable micro-organisms having improved stability. In particular, it concerns preparations of food grade micro-organisms, such as baker's yeast or probiotic bacteria, having an improved long-term storage stability.

Micro-organisms are widely used in the food industry for fermentation processes as well as for their beneficial effect on human or animal health. Generally, the micro-organisms marketed for these purposes are formulated as freeze-dried powders in a low water environment.

A general problem encountered in the application of such micro-organism preparations is the limited storage stability of the cells. For instance, over time starter bacteria become less viable resulting in increased lag-phases and consequently insufficient activities in the scheduled production process. High dosages are necessary to compensate for this loss of activity. Therefore, with a storage stability the dosing can be lower.

Baker's yeast is generally produced and marketed in two different forms of vastly different water content, namely as fresh baker's yeast (residual water content approx. 65 to 75% by weight) and as dried baker's yeast (residual water content approx. 10% by weight or less).

Fresh baker's yeast is a yeast composition of a plastically-firm consistency from which extracellular water has been substantially removed by mechanical extraction. It is made up for retail in various forms. Best known is the compressed yeast which is shaped into pound pieces or small domestic cubes. Also known is fresh baker's yeast in lump or coarsely granulated form; known as "bagged yeast"; this form is preferred by many large scale users. When fresh baker's yeast is made up for sale in this way, it is necessary, prior to using it for baking purposes, to suspend it in water to make sure the lumpy moist yeast becomes finely dispersed and will blend evenly with the flour ("dissolving" the yeast).

In relatively rare cases, fresh baker's yeast is also marketed in the form of a liquid aqueous cellular suspension known as "yeast milk" or "liquid yeast". However, the fact that it spoils very rapidly when stored, along with other disadvantages, impair this form of presentation.

In contrast, dried baker's yeast is a yeast cell composition of more or less finely granulated or lump form which has been completely dehydrated under gentle conditions. Prior to being used for baking, most types of dried baker's yeast have to be reconstituted under special conditions with water or with aqueous solutions. Only a few types are "instant" in nature and can be added directly to the flour.

A considerable disadvantage of fresh baker's yeast is the fact that it spoils relatively quickly when stored, its shelf life depending upon its water content. This spoilage is a consequence of the endogenous metabolic processes taking place in the yeast cells and which, after certain intracellular reserves have been consumed, lead to autolysis of the yeast. Naturally, since the endogenous metabolic rate depends upon the temperature, the yeast spoils more rapidly at higher temperatures than at low temperatures. The time before onset of autolysis at a specific storage temperature was used in the past to be taken mostly as a measure of the storage life of a fresh baker's yeast. As far as possible, therefore, fresh baker's yeast is transported and stored in a refrigerated state.

Many attempts to improve the keeping properties of fresh baker's yeast are known from the literature. In the field, the term "improving" or "improved" relate to the improvement in comparison with untreated organisms. Additions of specific hydrophilic water binding agents have been suggested with the object of reducing the water content of the yeast cells, so retarding those endogenous metabolic processes dependent not only upon the temperature but also upon the effective water activity, so improving the keeping properties of the yeast. However, none of the proposals made so far in this direction has succeeded in becoming accepted in practice.

It is therefore an object of the present invention to provide a method that is effective in increasing the storage stability or shelf life of viable (food grade) micro-organisms. Furthermore, the invention is aimed at providing a micro-organism preparation having prolonged storage stability under storage conditions that are conventional for the type of organism, typically between 4 and 8°C. In particular, a storage stability of up to several weeks or even several months is desired.

The present inventors surprisingly found that the mixing of micro-organisms with a water-in-oil (W/O) emulsion can enhance the viability of the micro-organisms upon prolonged storage.

Accordingly, the invention provides a micro-organism preparation comprising micro-organisms in a W/O emulsion and the uses thereof, for example as ingredient in a nutritional composition or food item. Also provided is a method for enhancing the storage stability of a viable micro-organism, comprising mixing said micro-organism with a water-in-oil (W/O) emulsion.

A method of the invention allows for improved or enhanced storage stability (also referred to as shelf-life) of a wide variety of micro-organisms as compared to micro-organisms that are not treated with a W/O emulsion according to the present teaching. The method is easy to perform and does not require expensive ingredients. Rather, it typically encompasses the use of edible W/O emulsions that are commonly used as food item or food ingredient, for example butter.

The term 'viable micro-organism' refers to a micro-organism that is capable of life or normal growth and development. A 'micro-organism' is any organisms that can be seen only through a microscope, including bacteria, protozoa, algae, and fungi, including yeasts.
In one embodiment, the invention is practised on a micro-organism that is used in food (food grade micro-organism), such as fermenting bacteria, yeast, probiotics. Examples include lactic acid producing bacteria and baker's yeast *(Saccharomyces cerevisiae).*

The term 'probiotic' refers to viable bacteria that beneficially influence the health of the host. Probiotic bacteria include those belonging to the genera *Lactococcus, Streptococcus, Pediococcus, Enterococcus, Leuconostoc, Carnobacterium, Propionibacterium, Lactobacillus* or *Bifidobacterium.*

Bifidobacteria used as probiotics include *Bifidobacterium adolescentis, Bifidobacterium bifidum, Bifidobacterium animalis, Bifidobacterium thermophilum, Bifidobacterium breve, Bifidobacterium longum, Bifidobacterium infantis* and *Bifidobacterium lactis.* Specific strains of bifidobacteria used as probiotics include *Bifidobacterium breve* strain Yakult, *Bifidobacterium breve* RO7O, *Bifidobacterium lactis* Bb12, *Bifidobacterium longum* R023, *Bifidobacterium bifidum* R071, *Bifidobacterium infantis* R033, *Bifidobacterium longum* BB536 and *Bifidobacterium longum* SBT-2928.

Lactobacilli used as probiotics include *Lactobacillus acidophilus, Lactobacillus brevis, Lactobacillus bulgaricus, Lactobacillus casei, Lactobacillus cellobiosus, Lactobacillus crispatus, Lactobacillus curvatus, Lactobacillus fermentum, Lactobacillus* GG *(Lactobacillus rhamnosus* or *Lactobacillus casei* subspecies *rhamnosus), Lactobacillus gasseri, Lactobacillus johnsonii, Lactobacillus plantarum* and *Lactobacillus salivarus. Lactobacillus plantarum* 299v strain originates from sour dough. *Lactobacillus plantarum* itself is of human origin. Other probiotic strains of *Lactobacillus* are *Lactobacillus acidophilus BG2FO4, Lactobacillus acidophilus* INT-9, *Lactobacillus plantarum* ST31, *Lactobacillus reuteri, Lactobacillus johnsonii* LA1, *Lactobacillus acidophilus* NCFB 1748, *Lactobacillus casei Shirota, Lactobacillus acidophilus* NCFM, *Lactobacillus acidophilus* DDS-1, *Lactobacillus delbrueckii* subspecies *delbrueckii, Lactobacillus delbrueckii* subspecies *bulgaricus* type 2038, *Lactobacillus acidophilus* SBT-2062, *Lactobacillus brevis, Lactobacillus salivarius* UCC 118 and *Lactobacillus paracasei* subsp *paracasei* F19.

Lactococci that are used or are being developed as probiotics include *Lactococcus lactis, Lactococcus lactis* subspecies *cremoris (Streptococcus cremoris), Lactococcus lactis* subspecies *lactis* NCDO 712, *Lactococcus lactis* subspecies *lactis* NIAI 527, *Lactococcus lactis* subspecies l*actis* NIAI 1061, *Lactococcus lactis* subspecies lactis biovar diacetylactis NIAI 8 W and *Lactococcus lactis* subspecies *lactis* biovar diacetylactis ATCC 13675.

The principal probiotic yeast is *Saccharomyces boulardii. Saccharomyces boulardii* is also known as *Saccharomyces cerevisiae* Hansen CBS 5296 and *S. boulardii. S. boulardii* is normally a nonpathogenic yeast. *S. boulardii* has been used to treat diarrhea associated with antibiotic use.

*Streptococcus thermophilus* is a Gram-positive facultative anaerobe. It is a cytochrome-, oxidase- and catalase-negative organism that is nonmotile, non-spore forming and homofermentative. *Streptococcus thermophilus* is an alpha-hemolytic species of the *viridans* group. It is also classified as a lactic acid bacteria (LAB). *Steptococcus thermophilus* is found in milk and milk products. It is a probiotic and used in the production of yogurt. *Streptococcus salivarus* subspecies *thermophilus* type 1131 is a probiotic strain.

Enterococci are gram-positive, facultative anaerobic cocci of the *Streptococcaceae* family. They are spherical to ovoid and occur in pairs or short chains. Enterococci are catalase-negative, non-spore forming and usually nonmotile. Enterococci are part of the intestinal microflora of humans and animals. *Enterococcus faecium* SF68 is a probiotic strain that has been used in the management of diarrhoeal illnesses.
Probiotic bacterial cultures are today found in a wide range of products for consumption such as dairy products.
A further aspect of the invention relates to a method for providing a micro-organism preparation having long term storage stability, and to preparations obtainable by such method. The method comprises the steps of providing a hydrophilic composition comprising viable micro-organisms; admixing said composition with a water-in-oil emulsion under conditions wherein the micro-organisms are not subjected to physical manipulations that are capable of causing cell damage. The term 'hydrophilic composition' refers to any preparation of micro-organisms that is miscible with an aqueous medium, i.e. it is non-hydrophobic. The hydrophilic composition comprises for example dried, lyophilized and/or freshly cultured cells. The composition may comprise two or more different types of micro-organisms, for example a mixture of *Bifidobacteria* and *Lactobacillus* bacteria. In one embodiment, providing a hydrophilic composition viable micro-organisms comprises culturing the micro-organisms in an aqueous medium, harvesting the cultured micro-organisms, optionally washing the harvested micro-organisms with an aqueous medium, and pelleting the micro-organisms. The washing medium can be a sterile aqueous solution, for instance sterile water or a 0.85% NaCl solution.

The amount of micro-organisms to be admixed with the W/O emulsion can vary. Of course, it is possible to incorporate more than one type of micro-organism in the composition. Also, the micro-organisms may but do not have to be added in the same physical state. For example, organism A can be added as dried cells and organism B as freshly cultured, wet cells.
In one embodiment, the resulting preparation comprises from about 10⁴ - 10¹² colony forming units (cfu) per gram, preferably 10⁶ - 10¹⁰ / gram. These amounts can relate either to the total number of different types of micro-organisms or to the amount of each distinct type. Based on the total weight of the preparation, the micro-organisms may for example account for 0.1 to about 20 weight%. The micro-organisms can make up from about 0.2 to 10 weight %, preferably 0.5 to 5 weight % of the total preparation. For example, 10-100 mg of cells (e.g. wet bacterial cells or lyophilized yeast cells) is added per 5 grams of W/O emulsion.

An emulsion is a thermodynamically unstable two-phase system consisting of at least two immiscible liquids, one of which is dispersed in the form of small droplets throughout the other, and an emulsifying agent. The dispersed liquid is known as the internal or discontinuous phase, whereas the dispersion medium is known as the external or continuous phase. Where water or an aqueous solution is dispersed in an oily/oleaginous medium, the system is known as a water-in-oil (W/O) emulsion. W/O emulsions are generally formed if the aqueous phase constitutes < 45% of the total weight and a lipophilic emulsifier is used.

It is noted that throughout this specification the terms oil and fat are used interchangeably, unless indicated otherwise. Accordingly, a W/O emulsion also refers to a water-in-fat emulsion.

In one embodiment of the invention, the viable micro-organisms are mixed with a W/O emulsion comprising at least 50%, preferably at least 60%, more preferably at least 70% fat. For example, a method of the invention comprises mixing micro-organisms throughout a W/O emulsion comprising from about 60% to about 95% fat. Very satisfying results were obtained with a W/O emulsion comprising from about 70% to about 90% fat. The term 'mixing" or 'admixing' encompasses any form of blending or combining the viable cells throughout the emulsion, as long as the cells remain intact. The W/O emulsion may be heated, e.g. to above room temperature, to decrease its viscosity and facilitate the admixing process. High temperatures which may negatively affect the viability of the micro-organisms should be avoided. Also, too high temperatures may cause the dispersed water droplets emulsion to merge with the continuous phase, thus disturbing the W/O emulsion.
The efficacy of mixing can be visualized in a given test set-up by the addition of a dye or colorant to the micro-organism prior to mixing.
Thus, the fat or oil of the water-in-oil preparation may be any fat or oil suitable for consumption that is derived from plant, from dairy, from a non-dairy or synthetically generated. The fat or the oil can be a liquid fat or oil and/or it can be a solid fat or oil. The liquid form oil or fat may be derived from either vegetable or animal sources. Liquid vegetable oils of fats can be derived from soybean oil, sunflower oil, palm oil, palm kernel oil, both high and low erucic rapeseed oil, coconut oil, olive oil, sesame oil, peanut oil, corn oil, alga oil and mixtures thereof. Animal liquid oils or fats may be derived from fish oil, tallow, sardine oil, dairy fat and mixtures thereof.
The solid form oil or fat may include triglycerides from either vegetable or animal sources. Such vegetable triglycerides include soybean oil, sunflower oil, palm oil, palm kernel oil, both high and low erucic rapeseed oil, coconut oil, olive oil, sesame oil, peanut oil, corn oil, alga oil and mixtures thereof. Triglycerides from animal sources include fish oil, tallow, sardine oil, dairy fat and mixtures thereof.
The dairy fat may originate from any lactating livestock animal whose milk is suitable for consumption. Examples of such livestock animals include cows, buffalo, goats, lama, sheep, horses, camels and other ruminants.

In a preferred embodiment, cows' milk fat may provide a suitable source of the dairy fat used in the practice of the invention.

In a preferred embodiment, the emulsion is butter, margarine or a spread, which all are W/O emulsions. Margarine and spreads contain added emulsifiers such as lecithin and monoglycerides to aid in the emulsion preparation. Butter in contrast contains milkfat lecithin, a natural emulsifier. Commercial butter is about 82% butterfat and 15% water; traditionally-made butter may have as little as 65% fat and 30% water. Butterfat consists of many moderate-sized, saturated hydrocarbon chain fatty acids. It is a triglyceride, an ester derived from glycerol and three fatty acid groups.

The type of fat and / or the optimal percentage fat in a W/O emulsion for use in the present invention can depend on several factors, including the type of micro-organism to be treated, the storage conditions (e.g. temperature), and the properties of the end product in which the emulsion comprising the micro-organisms is to be used. It is within the normal routine of a person skilled in the art to select a suitable W/O emulsion for a specific application of the present teaching.

In one aspect of the invention, the emulsion is butter, preferably a butter with from about 65% to about 90% fat. For example, mixing of a probiotic lactobacillus strain with butter (either 70 or 82% fat) increased the number of viable cells (determined as colony forming units per gram (cfu/g)) after a storage period of 26 weeks at 7°C 40-fold as compared to freshly cultured cells that had not been treated.

A different probiotic strain, *S. thermophilus,* showed increased long term survival if the cells were mixed with a W/O emulsion comprising from about 70% to about 90% fat.

A method of the invention can be used to achieve a survival of more than 20%, preferably more than 25%, more preferably more than 40% of the viable micro-organisms upon prolonged storage, for example after 26 weeks storage at 7°C as compared to freshly cultured cells that are not treated.

A preparation with (food grade) micro-organisms as provided herein is characterised with an increased shelf life. The shelf life of the W/O preparation would generally be determined by the capacity of the lactic acid bacteria to exhibit viable numbers in the range of from about 10⁴-10⁸ cfu/g. In one embodiment, a micro-organism preparation is characterised with viable micro-organisms in the range of from about 10⁴-10⁸ cfu/g, preferably from about 10⁶-10⁸ cfu/g approximately 20 weeks after the day of production. In a specific embodiment, a micro-organism preparation comprising yeast is characterised with viable micro-organisms in the range of from about 10⁶-10⁸ cfu/g, preferably from about 10⁷-10⁸ cfu/g approximately 20-30 weeks after the day of production. The day of production refers to the day on which the micro-organism is treated with a W/O emulsion and stored under suitable storage condition, e.g. refrigerated.

Microscopic analysis of the micro-organism preparation obtained by a method of the invention revealed that most of the micro-organisms localized at the interphase between the water and oil phase and the dispersed aqueous phase. Very little was found to be associated with the continuous oil phase.

Accordingly, the invention provides a micro-organism preparation comprising viable micro-organisms in a water-in-oil emulsion, wherein said micro-organism is localized primarily at the water/oil interphase and /or in the water phase of said W/O emulsion. Furthermore, said micro-organism is essentially absent from the oil phase. The localization of the micro-organisms in the preparation can be readily determined by methods known in the art. As described herein, a sample of the preparation can be subjected to microscopic analysis. Preferably, the viable micro-organisms are visualized using one or more reagents, such as a dye. Also, the continuous oil phase and/or the dispersed water droplets may be stained to facilitate detection and quantification of the micro-organisms.

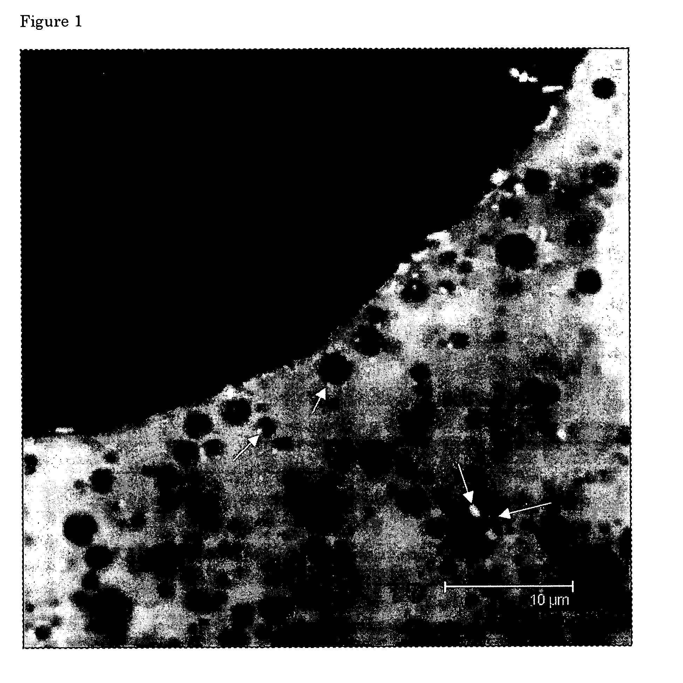

Confocal laser scanning microscopy (CLSM) is useful for the analysis of the micro-organisms throughout the W/O emulsion. Figure 1 shows a representative CLSM picture taken from a preparation according to the invention, showing that the micro-organisms localizes primarily at the water/oil interphase and in the water phase of the W/O emulsion In one embodiment, at least 80%, preferably at least 90%, more preferably at least 95% of the micro-organisms localizes to the water/oil interphase and/or to the water phase of the W/O emulsion. Typically, less than 10%, preferably less than 5%, more preferably less than 3% localizes to the oil phase.

In a specific aspect, the invention provides a micro-organism preparation comprising viable micro-organisms in a water-in-oil emulsion comprising from about 60% to about 95% fat, preferably from about 70% to about 90% fat, wherein at least 90% of said micro-organism is localized at the water/oil interphase and /or in the water phase of said W/O emulsion and/or wherein said micro-organism is essentially absent from the oil phase.

Due to the incorporation of the micro-organism in the W/O emulsion, its storage stability is significantly increased. For example, over a storage period of 26 weeks a loss of viability of only 50% was observed when fresh yeast was incorporated in a W/O emulsion, as compared a loss of 99% for untreated, wet yeast cells.

The micro-organism preparation according to the invention is clearly distinct from the water-in-oil product disclosed in WO2005/089564 wherein a probiotic needs to be premixed in a hydrophobic medium, e.g. an oil, which premixture is subsequently admixed with a W/O emulsion. As a result, the probiotic localizes to the oil/fat element of the preparation. In contrast, a method of the invention does not require premixing micro-organisms with a hydrophobic medium. Rather, fresh, wet cells can be directly admixed with the W/O emulsion.

It has been previously disclosed in US2006/0110494 to coat or encapsulate functional bakery ingredients such as enzymes, yeast or starches, with a continuous lipophilic layer to make available the functionality of the functional ingredients in a controlled way during the dough preparation process and to protect the ingredients during storage and transport. The lipophilic layer is preferably applied by spray drying. The use of W/O emulsions is not disclosed in US2006/0110494.

In one embodiment, a preparation of the invention comprises viable micro-organisms in a W/O emulsion comprising from about 60% to about 95% fat, preferably from about 70% to about 90% fat.

For applications in the food industry, the oil phase of the emulsion comprised in the preparation is preferably edible fat or oil. In one embodiment, the W/O emulsion comprises a dairy fat such as milk fat. Exemplary preparations include W/O emulsion comprising 70-99 wt% dairy fat, such as preparations that are based on butter or low fat butter. Besides the W/O emulsion and the viable micro-organisms, a preparation may contain one or more further additives that are of use in the preparation. These include additives which affect the properties of the preparation, such as stability, taste, texture, appearance, processability, flavour.

In a preferred embodiment, the preparation comprises one or more food grade micro-organisms, for instance a micro-organism selected from the group consisting of fermenting bacteria, lactic acid bacteria, yeast and probiotics.
In a specific aspect, the invention provides a micro-organism preparation comprising baker's yeast, preferably fresh baker's yeast, in a W/O emulsion wherein majority of the yeast cells localize to the water/oil interphase and/or the water phase. For example, provided is a preparation comprising (fresh) yeast cells mixed with butter. Also provided is a preparation comprising one or more probiotic bacterial strains (e.g. as lyophilized or freshly cultured cells) in a W/O emulsion comprising from about 70 to about 95% (milk)fat. The probiotic is for example *Lactobacillus casei, Lactobacillus reuteri or Streptococcus thermophilus.* However, the skilled person will recognize that the present teaching is not restricted to any type or particular strain of micro-organism but that it can be applied to increase the storage stability of many different (food grade) micro-organisms.
A preparation of the invention is obtainable by the steps of mixing said micro-organisms, for example as freshly cultured cells, with a preformed water-in-oil emulsion, for example butter.

In a further aspect, the invention provides a nutritional composition comprising a food-grade micro-organism preparation having improved storage stability. As used herein, a nutritional composition is capable of imparting a nutritional and/or health or practical benefit on the consumer. The health benefit may be exerted by a probiotic micro-organism. The composition can be a processed, partially unprocessed or unprocessed food composition. It is for example a dough, preferably a bread dough. Other exemplary compositions include functional butter, cheese, spread and a drink.

Also provided is a method for preparing a nutritional composition comprising admixing a micro-organism preparation with one or more edible ingredients.

Yet a further aspect relates to a method for increasing the storage stability of a viable micro-organism, comprising mixing said micro-organism with a water-in-oil (W/O) emulsion. The W/O emulsion may comprise from about 60% to about 95% fat, preferably from about 70% to about 90% fat. As discussed herein above, the oil phase of the emulsion can be any type of an edible fat or oil, preferably a dairy fat such as milk fat.

The formation of the water-in-oil emulsion typically includes the steps of mixing the fat and water under conditions favouring the formation of a water-in-oil phase relationship, which conditions can be readily determined with a minimum of experimentation by a person skilled in the relevant arts in light of the present disclosure.

By way of example, there is provided a process for emulsifying a mixture of water and oil, in the presence of emulsifying agents, wherein the water is heated to a temperature about equal to that of a melted fat. In addition to facilitating the desired emulsification of the mixture, the preheating of the water ensures that the thermodynamic processes entailed in the above mentioned tailoring of the fats crystal population are not unduly disrupted.

Whereas W/O emulsions can be easily prepared, it is particularly convenient to practise the present invention using a preformed W/O emulsion, preferably a commercially available W/O emulsion, such as butter.

A method of the invention is particularly suitable for improving the storage stability of one or more food-grade micro-organism(s), preferably selected from the group consisting of fermenting bacteria, lactic acid bacteria, yeast and probiotics, preferably yeast and probiotics. The micro-organisms can be added as dried, lyophilized or fresh cells.

As exemplified herein below, the method can be used to maintain more than 0.1%, preferably more than 1%, more preferably more than 10% of the viability (expressed as colony forming units per gram (cfu/g)) upon storage of the micro-organism during a period of from about 8 to 28 weeks. Also provided is a method for maintaining at least 0.1%, preferably at least 1%, more preferably at least 10% of the viability (cfu/g) upon storage of a micro-organism during a period of at least 16, preferably at least 20 weeks, comprising mixing said micro-organism with a water-in-oil (W/O) emulsion.

The extent of the beneficial effect of incorporating the micro-organism in a W/O emulsion was found to depend on the type of micro-organism. For example, 20-50% of the viability of a fresh yeast preparation prepared according to the invention comprising around 5.10⁷ cfu/g at the day of preparation was maintained after a storage period of 28 weeks. In contrast, only about 1% of the viability was maintained when the untreated, fresh yeast cells were left untreated.

As another example, lactic acid bacteria of the genus *Lactobacillus* having a viability of 10⁷⁻⁸ cfu/g at the day of preparation maintained a viability of around 10³⁻⁴ cfu/g after storage period of 26 weeks whereas the viability of untreated bacteria dropped to 10² cfu/g after only two weeks storage to become undetectable after 8 weeks.

Also provided herein is a micro-organism preparation obtainable by the steps of mixing said micro-organisms with a water-in-oil emulsion, and the use of such a preparation in nutritional compositions.

### LEGENDS TO THE FIGURES

Figure 1: Confocal Laser Scanning Microscopic (CLSM) analysis of *Lactobacillus casei* mixed with butter with a reduced fat content. The micro-organism clearly localizes primarily to the oil/water interphase and to the aqueous dispersed phase. No micro-organism is detected in the continuous oil phase. For experimental details, see Example 2.
Figure 2: Survival of fresh yeast preparations upon prolonged storage at 7°C, for details see example 1.
Figure 3: Survival of different strains of probiotic bacteria upon prolonged storage at 7°C. Panel A: *Streptococcus thermophilus .* Panel B: *Lactobacillus casei.* For experimental details see example 2

The invention is further illustrated by way of the following examples.

### Example 1: Incorporation of fresh baker's yeast in a W/O emulsion.

Baker's yeast was cultured in diluted (1:1) grape juice at 25°C for 18h. After growth the yeast cells were harvested by means of centrifugation (4°C, 4000 rpm, 10'). The cell pellets were washed twice with sterile water. The cells were centrifuged (4°C, 4000 rpm, 10') after each washing step.
The freshly cultured cells harvested from 250 ml of growth medium were mixed through 200 gram of butter, sunflower oil (room temperature) or pure butter fat (32°C) using a spoon. After proper mixing, the fatty mixtures (except for the sunflower variants) solidified by stirring on ice and were stored at 7°C. For the untreated variant of freshly cultured yeasts, 20 batches of 110 µg of cell pellet were stored at 7°C.

### Example 2: Incorporation of probiotic bacteria in a W/O emulsion.

Fresh cultures of *Lactobacillus casei* CRL431 and *Streptococcus thermophilus* prebiolact were prepared by culturing in MRS-broth (*Lactobacillus*) or LM17-broth (*Streptococcus*). The cultures were incubated for 24 hours at 37°C. The freshly grown cells were harvested by centrifuging (4°C, 4000rpm, 10min). The cell pellets were washed twice with 0.85% NaCl-solution (sterile). The cells were centrifuged after each washing step (4°C, 4000rpm, 10min). Butter, butter with reduced fat and butterfat were divided in portions of 100g in sterile bottles. Butterfat was warmed to 32°C and the other butters to room temperature for this purpose. The weight of each cell pellet (100 ml culture) of *S. thermophilus* was about 600 mg and that of *Lactobacillus casei* 900 mg. 0.8 ml of a food grade violet colouring dye-solution (5 mg/ml) was added to each cell pellet in order to be able to judge the efficacy of mixing. Three different batches were prepared for each organism:
- Butter (82% fat), mix one cell pellet with 100 grams of butter.
- Butter fat, mix one cell pellet with 100 grams of the melted milk fat.
- Butter with reduced fat (70% fat), mix one cell pellet with 100 grams of reduced fat butter.

By preparing the different varieties in this way, each fatty variant contained either 45 mg of cells (lactobacilli) or 30 mg of cells (streptococci) per 5 gram. Mixing was performed at room temperature except for the butterfat (32°C). After proper mixing, the fatty mixtures solidified by stirring on ice and were stored at 7°C. For the untreated variant of freshly cultured bacteria for lactobacilli 85 µl of cells (45 mg cell pellet and 40 mg colouring agent) was put in a sterile sample pot of 80 ml, in total 15 pots. For streptococci 70 µl of cells (30 mg cell pellet and 40 mg colouring agent) was put in a sterile sample pot of 80 ml, in total 15 pots. These were stored at 7°C.

Figure 1 shows a CLSM-picture of *Lactobacillus casei* mixed with butter with reduced fat after storage for 26 weeks at 7°C. The butter sample was put on ice for 30 min. to cool the sample. Three µl of component A (1.67 mM SYTO 9 and 1.67 mM propidium iodide in DMSO) was pipetted into an empty vial. Three µl of component B (1.67 mM SYTO 9 and 18.3 mM propidium iodide in DMSO), 1 µl of Nile Red (0.1% in DMSO) and 13 µl of filtrated (0.1 µm) dematerialized water were added. After thorough mixing, 6 µl of this mixture was applied to a butter sample (5x5x0.5 mm). The sample was incubated in a refrigerator on ice for 30 minutes prior to analysis. In the picture, the living bacteria are white, water is black and fat is grey. For this picture, a 63x water objective is used. The picture clearly demonstrates that most of the living bacteria are found at either the water-fat interface or in the water droplets.

### Example 3: Storage stability of micro-organisms incorporated in a W/O emulsion.

The storage stability of the preparations of Examples 1 and 2 was determined as follows.
The number of colony forming yeasts in time after storage at 7°C was determined by plating appropriate dilutions on YGC-agar, incubation 4 days 25°C. Determination of the number of colony forming units of *Lb. casei* in time on MRSa (anaerobic) and of *St. thermophilus* on LM17, 72h 37°C.
For fatty products, the first dilution is made by mixing 5 gram of the product with 45 g of warm (45°C) pepton physiological salt solution (ppss) and stomacher for 120" = 10⁻¹. After stomacheren the bag is sealed and put in a water bath of 45°C for complete mixing of the liquid for 30 sec. Non-fat containing variants: add 50 gram of warm (45°C) ppss to a bottle = 10⁻¹.
For all variants warm ppss should be used to prepare the dilution 10⁻². All other dilutions are prepared with ppss of room temperature.

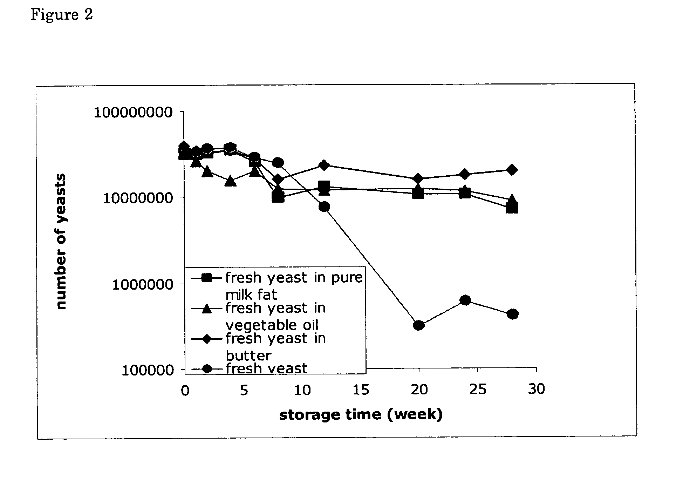

Freshly cultured yeast cells remained much more viable after storage for 28 weeks when they were mixed with butter or butterfat. The recoveries for freshly cultured cells, cells mixed with butter, milk fat and vegetable oil after 28 weeks at 7°C were, respectively, 1, 50, 23 and 28% (figure 2).

The storage stability of the probiotic bacterium *Lactobacillus casei* CRL431 was determined for 26 weeks at 7°C using lyophilized cells. The number of viable cells present after this period increased 40 times by mixing them with butter. Mixed with milk fat, however, these bacteria lost their viability quite fast. Freshly cultured cells of this probiotic remained more stable as well when mixed with butter.

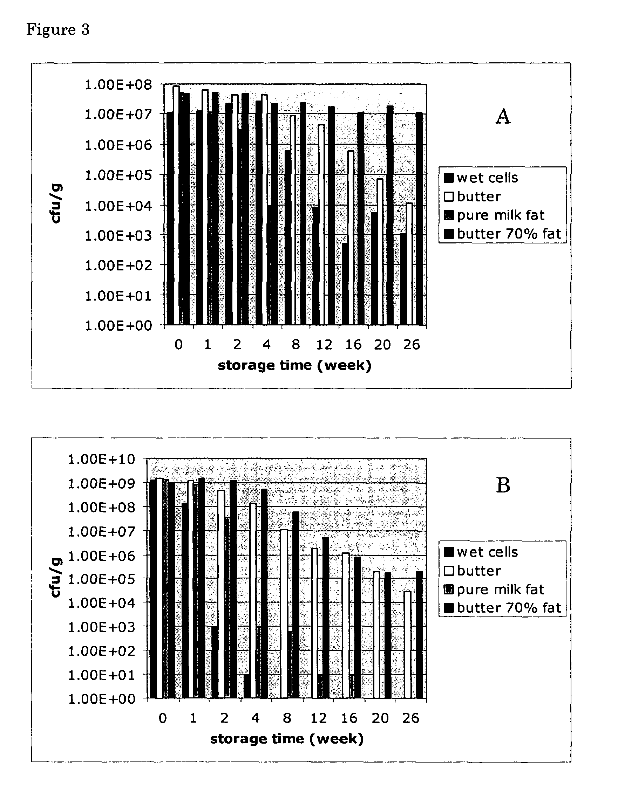

The storage stability of three freshly cultured probiotics (*Lb. casei, Lb. reuteri* and *St. thermophilus*) mixed with butter (82% fat), pure milk fat and butter with reduced fat (70% fat) was determined during storage at 7°C for 26 weeks. Mixed with butter or butter with reduced fat all three probiotics retained their viability longer than the stored wet cells themselves. Mixing with milk fat did not increase the viability of the probiotics (see Figure 3).

## Claims

1. A micro-organism preparation comprising viable micro-organisms in a water-in-oil emulsion, wherein said micro-organism is localized primarily at the water/oil interphase and /or in the water phase of said W/O emulsion and/or wherein said micro-organism is essentially absent from the oil phase.

2. Preparation according to claim 1, wherein said W/O emulsion comprises from about 60% to about 95% fat, preferably from about 70% to about 90% fat.

3. Preparation according to claim 1 or 2, wherein the oil phase of said emulsion is an edible fat or oil, preferably a dairy fat such as milk fat.

4. Preparation according to any one of claims 1 to 3, wherein the W/O emulsion is butter, preferably butter comprising from about 70 to 95% milk fat.

5. Preparation according to any one of claims 1 to 4, wherein said micro-organism is a food grade micro-organism, preferably a micro-organism selected from the group consisting of fermenting bacteria, lactic acid bacteria, yeast and probiotics.

6. A nutritional composition comprising a micro-organism preparation according to claim 5, and at least one further edible ingredient.

7. Composition of claim 6, wherein said composition is a processed, a partially processed or an unprocessed food composition.

8. A method for providing a micro-organism preparation having long term storage stability, comprising the steps of:
- providing a hydrophilic composition comprising viable micro-organisms;
- admixing said composition with a water-in-oil emulsion under conditions wherein the micro-organisms are not subjected to physical manipulations that are capable of causing cell damage.

9. Method according to claim 8, wherein the hydrophilic composition comprises dried, lyophilized or freshly cultured cells.

10. Method according to claim 8 or 9, wherein said W/O emulsion comprises from about 60% to about 95% fat, preferably from about 70% to about 90% fat.

11. Method according to claim 10, wherein the oil phase of said emulsion is an edible fat or oil, preferably a dairy fat such as milk fat.

12. Method according to any one of claims 8 to 11, wherein said micro-organism is a food-grade micro-organism, preferably selected from the group consisting of fermenting bacteria, lactic acid bacteria, yeast and probiotics, preferably yeast and probiotics.

13. Method according to any one of claims 8 to 12, wherein the micro-organism is added as dried, lyophilized or fresh cells.

14. A method for increasing the storage stability of a viable micro-organism, comprising subjecting the micro-organism to a method according to any one of claims 8 to 13.

15. Method according to claim 14, for maintaining at least 0.1%, preferably at least 1%, more preferably at least 10% of the viability (cfu/g) upon storage of the micro-organism during a period of from about 8 to 28 weeks.

16. Method according to claim 14, for maintaining at least 0.1%, preferably at least 1%, more preferably at least 10% of the viability (cfu/g) upon storage of the micro-organism during a period of at least 16, preferably at least 20 weeks.
